# EUROPEAN PATENT APPLICATION

(11) **EP 3 985 589 A1**
(43) Date of publication of application: **20.04.2022**
(21) Application number: 20822519.3
(22) Date of filing: 01.06.2020
(51) Int. Cl.: G06Q 20/40, G06Q 40/00

(54) **FRAUD DETECTION DEVICE, FRAUD DETECTION METHOD, AND FRAUD DETECTION PROGRAM**

(30) Priority: 11.06.2019 JP 2019108517
(71) Applicant: NEC Corporation, 108-8001 Tokyo (JP)
(72) Inventor: OKUDA Minoru, Tokyo 108-8001 (JP); YOSHINAGA Naoki, Tokyo 108-8001 (JP)
(74) Representative: Betten & Resch
(86) International application number: PCT/JP2020/021566
(87) International publication number: WO 2020/250730

(57) **Abstract**

A fraud detection device 80 for detecting a fraudulent transaction in an operation of a financial institution includes a target data extraction unit 81 which extracts target data by excluding normal transaction data from the transaction data in the operation by unsupervised learning, a first learning unit 82 which learns a first hierarchical mixed model using training data, among the target data, which takes positive examples for the data indicating the fraudulent transaction and takes negative examples for the remaining data other than the positive examples, and a data exclusion unit 83 which excludes, from the target data, the target data which is set as negative example training data and is classified as a negative example by the first hierarchical mixed model.

## Description

### Technical Field

The present invention relates to a fraud detection device, a fraud detection method, and a fraud detection program for detecting a fraudulent transaction in the operations of a financial institution.

### Background Art

In the operations of a financial institution, various mechanisms have been proposed to detect a fraudulent transaction from transaction data so that a fraudulent transaction such as a fraudulent remittance and a fraudulent use of an account can be automatically detected. For example, one of the methods for detecting such a fraudulent transaction is to learn a model for detecting a fraudulent transaction based on the transaction data generated in the operation of a financial institution.

For example, the non-patent literature 1 describes data clustering algorithm (DBSCAN: Density-based spatial clustering of applications with noise which is an example of unsupervised learning, as a method for learning such this model.

### Citation List

### Non-patent Literature

NPL 1: Martin Ester, Hans-peter Kriegel, Jorg Sander, Xiaowei Xu, A density-based algorithm for discovering clusters in large spatial databases with noise, AAAI Press, p226--231, 1996

### Summary of Invention

### Technical Problem

On the other hand, the number of fraudulent transactions that occur in the operations of a financial institution is much smaller than the number of normal transactions. In other words, it can be said that the data of fraudulent transactions and the data of normal transactions are imbalanced. Therefore, even if an attempt is made to predict the fraudulent transactions by using the algorithm described in the non-patent literature 1, the prediction accuracy is very low or biased due to the problem of the imbalance data.

For that reason, it is desirable that the prediction accuracy of the model can be improved even when the model to detect the fraudulent transactions is learned using very few data (imbalance data) compared with normal transactions, such as fraudulent transactions occurring in the operations of a financial institution.

Therefore, it is an object of the present invention to provide a fraud detection device, a fraud detection method, and a fraud detection program that can learn a model so as to improve the accuracy of detecting a fraudulent transaction even when imbalance data is used.

### Solution to Problem

A fraud detection device according to the present invention is a fraud detection device for detecting a fraudulent transaction in an operation of a financial institution includes a target data extraction unit which extracts target data by excluding normal transaction data from the transaction data in the operation by unsupervised learning, a first learning unit which learns a first hierarchical mixed model using training data, among the target data, which takes positive examples for the data indicating the fraudulent transaction and takes negative examples for the remaining data other than the positive examples, and a data exclusion unit which excludes, from the target data, the target data which is set as negative example training data and is classified as a negative example by the first hierarchical mixed model.

The fraud detection method according to the present invention is a fraud detection method for detecting a fraudulent transaction in an operation of a financial institution includes extracting target data by excluding normal transaction data from the transaction data in the operation by unsupervised learning, learning a first hierarchical mixed model using training data, among the target data, which takes positive examples for the data indicating the fraudulent transaction and takes negative examples for the remaining data other than the positive examples, and excluding, from the target data, the target data which is set as negative example training data and is classified as a negative example by the first hierarchical mixed model.

The fraud detection program according to the present invention is a fraud detection program applied to a computer which detects a fraudulent transaction in an operation of a financial institution, causes the computer to execute a target data extraction process of extracting target data by excluding normal transaction data from the transaction data in the operation by unsupervised learning, a first learning process of learning a first hierarchical mixed model using training data, among the target data, which takes positive examples for the data indicating the fraudulent transaction and takes negative examples for the remaining data other than the positive examples, and a data exclusion process of excluding, from the target data, the target data which is set as negative example training data and is classified as a negative example by the first hierarchical mixed model.

### Advantageous Effects of Invention

According to the present invention, it is possible to learn a model so as to improve the accuracy of detecting a fraudulent transaction even when imbalance data is used.

### Brief Description of Drawings

[FIG. 1] It depicts a block diagram showing a configuration example of the first example embodiment of a fraud detection device according to the present invention.
[FIG. 2] It depicts an explanatory diagram showing an example of a discriminative model based on a hierarchical mixed model.
[FIG. 3] It depicts a flowchart showing an operation example of a fraud detection device of the first example embodiment.
[FIG. 4] It depicts a block diagram showing a configuration example of the second example embodiment of a fraud detection device according to the present invention.
[FIG. 5] It depicts an explanatory diagram showing an example of aggregated ratios for each score.
[FIG. 6] It depicts an explanatory diagram showing an example of visualized the ratio of target data.
[FIG. 7] It depicts a flowchart showing an operation example of a fraud detection device in the second example embodiment.
[FIG. 8] It depicts an explanatory diagram showing an example of a result of identifying normal transaction data.
[FIG. 9] It depicts an explanatory diagram showing an example of the correspondence between a learning result by unsupervised learning and a learning result.
[FIG. 10] It depicts an explanatory diagram showing an example of a result of excluding target data.
[FIG. 11] It depicts an explanatory diagram an example of the correspondence between target data after the data exclusion and the learning result.
[FIG. 12] It depicts a block diagram showing an overview of a fraud detection device according to the present invention.
[FIG. 13] It depicts a summarized block diagram showing a configuration of a computer for at least one example embodiment.

### Description of Embodiments

Hereinafter, example embodiment of the present invention is described with reference to the drawings.

### Example embodiment 1.

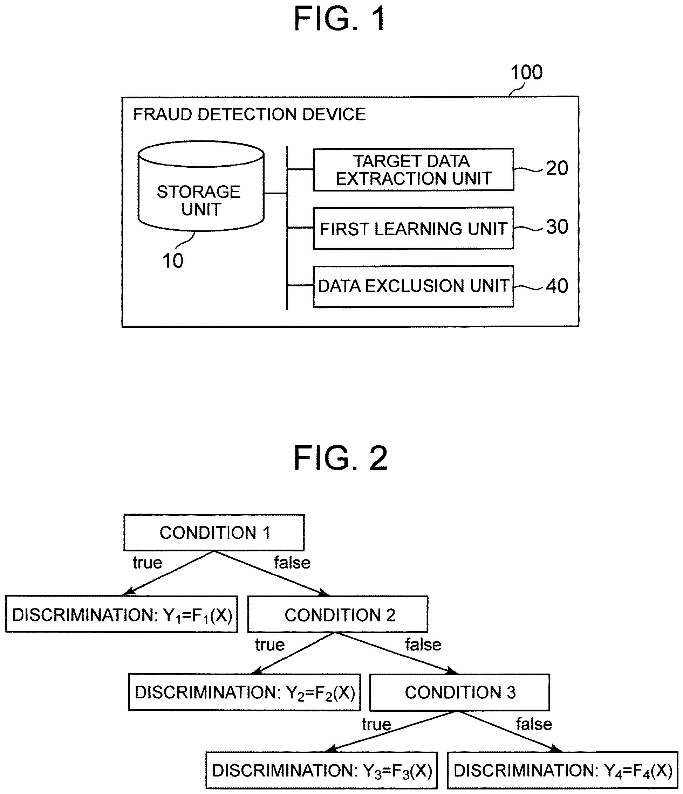

FIG. 1 is a block diagram showing a configuration example of the first example embodiment of a fraud detection device according to the present invention. The fraud detection device 100 in this example embodiment comprises a storage unit 10, a target data extraction unit 20, a first learning unit 30, and a data exclusion unit 40. The fraud detection device 100 of this example embodiment is a device for detecting fraudulent transactions (for example, fraudulent remittance, fraudulent use of account, etc.) in the operations of a financial institution from obtained electronic data.

The storage unit 10 stores transaction data used to determine whether it is a fraudulent transaction or not. The transaction data includes, for example, information on deposits and withdrawals, dates and times, amounts, and other information used in transactions conducted at each financial institution. The format of the transaction data is arbitrary and may be determined according to the financial institution, etc. to be targeted. The storage unit 10 may also store various parameters necessary for the first learning unit 30, which will be described below, to learn the model. The storage unit 10 is realized by a magnetic disk or the like, for example.

The target data extraction unit 20 excludes transaction data that is determined to be normal by unsupervised learning (hereinafter, referred to as normal transaction data) from transaction data in the operations of a financial institution to extract data (hereinafter, referred to as target data) to be used for learning by the first learning unit 30. The method by which the target data extraction unit 20 performs unsupervised learning is arbitrary. The target data extraction unit 20 may, for example, extract the target data using the algorithm described in the non-patent literature 1 described above.

In the following explanation, the number of cases in which the data of a positive example was determined d to be a positive example is written as TP (True Positive), and the number of cases in which the data of a negative example was determined to be a negative example is written as TN (True Negative). The number of cases in which the data of a positive example was determined to be a negative example is written as FN (False Negative), and the number of cases in which the data of a negative example was determined to be a positive example is written as FP (False Positive).

That is, the target data extraction unit 20 excludes data corresponding to TP classified as normal transaction data by unsupervised learning to extract data corresponding to the other including TN classified as fraudulent transaction data as the target data.

The first learning unit 30 learns the hierarchical mixed model using the training data, among the target data extracted by the target data extraction unit 20, which takes positive examples for the data indicating fraudulent transactions and takes negative examples for the remaining data other than the positive examples. In order to distinguish from the explanation described below, the hierarchical mixed model learned by the first learning unit 30 is referred to as the first hierarchical mixed model.

The first learning unit 30, for example, generates the hierarchical mixed model by heterogeneous mixture machine learning using the generated training data. However, the method by which the first learning unit 30 learns the hierarchical mixed model is not limited to heterogeneous mixture machine learning, as long as the same technology is used.

The hierarchical mixed model is represented by a tree structure in which components are placed to leaf nodes and gate functions (gate tree functions) that indicate branching conditions are placed to other upper nodes. The branching conditions of the gate functions are described using explanatory variables. When data is input to the hierarchical mixed model, the input data is branched by the gate function and assigned to one of the multiple components after following the root node and each node.

FIG. 2 is an explanatory diagram showing an example of a discriminative model based on a hierarchical mixed model. The example shown in FIG. 2 indicates that, based on conditions 1 to 3, the input data is classified into one of four types of leaf nodes and is discriminated based on the discriminants Y₁ to Y₄ placed in each leaf node. For example, when data satisfying condition 1 (data satisfying condition 1=true) is input, the data is classified into a leaf node to which the discriminant Y₁ is placed, and discrimination is performed, based on the discriminant Yi=Fi(X).

The data exclusion unit 40 excludes, from the target data, the target data which is set as a negative example training data and is classified as a negative example by the first hierarchical mixed model. That is, the data exclusion unit 40 excludes, from the target data, the data corresponding to the negative example data (TNh) that is predicted to be a negative example.

Specifically, the data exclusion unit 40 discriminates the data classified in a leaf node using a discriminant placed in that leaf node of the hierarchical mixed model. The data exclusion unit 40 similarly discriminates the data classified in the other leaf nodes, and aggregates the discrimination results of the data classified in each leaf node. The data exclusion unit 40 calculates, for each leaf node (i.e., a condition under which the data is classified), a ratio of the classified data that is predicted to be a negative example. When the calculated ratio is greater than or equal to a predetermined threshold, the data exclusion unit 40 determines that the data corresponding to the condition for classifying into that node is excluded from the target data.

The above-described process by the data exclusion unit 40 corresponds to a process of excluding the normal transaction data from the data that is discriminated as the fraudulent transaction data by unsupervised learning. By excluding the normal transaction data from the target data in this way, it becomes possible to increase the ratio of the fraudulent transaction data to the entire target data, which makes it easier to detect fraudulent transactions. Furthermore, the model can be learned to improve the accuracy of detecting fraudulent transactions, because a training data set, in which the degree of imbalance between the fraudulent transaction data and the normal transaction data is reduced, can be generated.

The learning process by the first learning unit 30 and the exclusion process by the data exclusion unit 40 may be performed repeatedly. Specifically, each time the first hierarchical mixed model is generated by the first learning unit 30, the data exclusion unit 40 may identify conditions for excluding the target data and determine that data corresponding to the condition are to be excluded from the target data. That is, the data exclusion unit 40 may identify the conditions for excluding the target data each time the first hierarchical mixed model is learned, and exclude the data corresponding to any of the conditions from the target data. By repeating the process in this way, it is possible to increase the data to be excluded.

The target data extraction unit 20, the first learning unit 30, and the data exclusion unit 40 are realized by a processor (for example, a CPU (Central Processing Unit), a GPU (Graphics Processing Unit), an FPGA (field-programmable gate array)) of a computer that operates according to a program (fraud detection program).

For example, a program may be stored in the storage unit 10, and the processor may read the program and operate as the target data extraction unit 20, the first learning unit 30, and the data exclusion unit 40 according to the program. In addition, the functions of the fraud detection device may be provided in a SaaS (Software as a Service) format.

The target data extraction unit 20, the first learning unit 30, and the data exclusion unit 40 may each be implemented by dedicated hardware. Some or all of the components of each device may be realized by general-purpose or dedicated circuit (circuitry), processors, or combinations thereof. These may be configured by a single chip or multiple chips connected through a bus. Some or all of the components of each device may be realized by a combination of the above-mentioned circuits and the program.

In the case where some or all of the components of the fraud detection device are realized by a plurality of information processing devices, circuits, or the like, the plurality of information processing devices, circuits, or the like may be centrally located or distributed. For example, the information processing devices, circuits, etc. may be realized as a client-server system, a cloud computing system, etc., each of which is connected through a communication network.

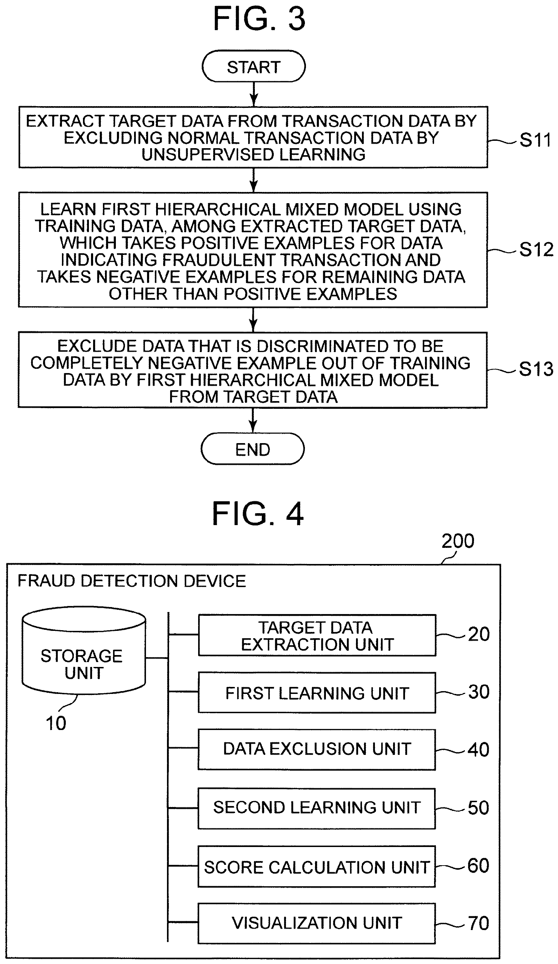

Next, the operation of the fraud detection device of this example embodiment will be described. FIG. 3 is a flowchart showing an operation example of a fraud detection device in this example embodiment. The target data extraction unit 20 excludes normal transaction data from transaction data in the operations of a financial institution by unsupervised learning to extract target data (step S11). The first learning unit 30 learns a first hierarchical mixed model using the training data, among the extracted target data, which takes positive examples for the data indicating fraudulent transactions and takes negative examples for the remaining data other than the positive examples (step S12). The data exclusion unit 40 excludes the data (TN) that is discriminated to be a completely negative example out of the training data by the first hierarchical mixed model from the target data (step S13).

As described above, in the present example embodiment, the target data extraction unit 20 extracts target data by excluding normal transaction data from transaction data in the operations of a financial institution by unsupervised learning, and the first learning unit 30 learns a first hierarchical mixed model using the training data, among the extracted target data, which takes positive examples for the data indicating fraudulent transactions and takes negative examples for the remaining data other than the positive examples. Then, the data exclusion unit 40 excludes the target data (TN) that is discriminated to be a completely negative example out of the training data by the first hierarchical mixed model, from the target data. Thus, it is possible to learn a model so as to improve the accuracy of detecting a fraudulent transaction even when imbalance data is used.

### Example embodiment 2.

Next, a second example embodiment of the fraud detection device according to the present invention will be described. In the second example embodiment, a method of visualizing a prediction result according to accuracy of a fraudulent transaction is described. FIG. 4 is a block diagram showing a configuration example of the second example embodiment of a fraud detection device according to the present invention. The fraud detection device 200 of this example embodiment comprises a storage unit 10, a target data extraction unit 20, a first learning unit 30, a data exclusion unit 40, a second learning unit 50, a score calculation unit 60, and a visualization unit 70.

That is, the fraud detection device 200 of the present example embodiment differs from the fraud detection device 100 of the first example embodiment in that the second learning unit 50, the score calculation unit 60, and the visualization unit 70 are further comprised. Other configurations are the same as those of the first example embodiment.

The second learning unit 50 learns a hierarchical mixed model using training data which takes positive examples for the data indicating fraudulent transactions, among the remaining target data after excluding by the data exclusion unit 40, and takes negative examples for the remaining data other than the positive examples. In order to distinguish the hierarchical mixed model from the hierarchical mixed model learned by the first learning unit 30, the learning model generated by the second learning unit 50 is described as the second hierarchical mixed model.

The score calculation unit 60 calculates a discrimination result of the data for each leaf node in the hierarchical mixed model. Specifically, the score calculation unit 60 calculates as a score a ratio of target data (i.e., ratio of TPs) for which the training data is discriminated as a positive example by the second hierarchical mixed model.

Specifically, the score calculation unit 60 discriminates the data classified in the leaf node using a discriminant placed to each leaf node in the same manner as the data exclusion unit 40 in the first example embodiment. The score calculation unit 60 calculates the ratio of TP as a score for each leaf node (i.e., a condition under which the data is classified). The score calculation unit 60 identifies the condition of the node for which the calculated score is equal to or greater than a predetermined threshold as a condition for which the accuracy of the fraudulent transaction is high.

The learning process by the second learning unit 50 and the data identification process by the score calculation unit 60 may be performed repeatedly. Specifically, each time the second hierarchical mixed model is generated by the second learning unit 50, the score calculation unit 60 may identify the condition with high accuracy of the fraudulent transaction. By repeating processes in this manner, it is possible to increase the number of conditions with high accuracy of fraudulent transactions.

The visualization unit 70 visualizes the ratio of the target data aggregated for each score to the overall target data. Specifically, the visualization unit 70 aggregates the number of cases of the data corresponding to the condition of the node for which the score corresponding to the predetermined value or range is aggregated. Then, the visualization unit 70 calculates a ratio of the sum of cases to the overall number of cases.

For example, suppose that the ratio of data included in the node whose score is calculated to be 100% is to be visualized. In this case, the visualization unit 70 aggregates the number of data that match the condition of the node whose ratio of TP is calculated to be 100%. For example, suppose that the ratio of data is visualized for each score in 10% increments. In this case, the visualization unit 70 aggregates the number of cases of data that match the condition of the node whose ratio of TP is calculated to be 100% to 90%, 100% to 80%, and so on.

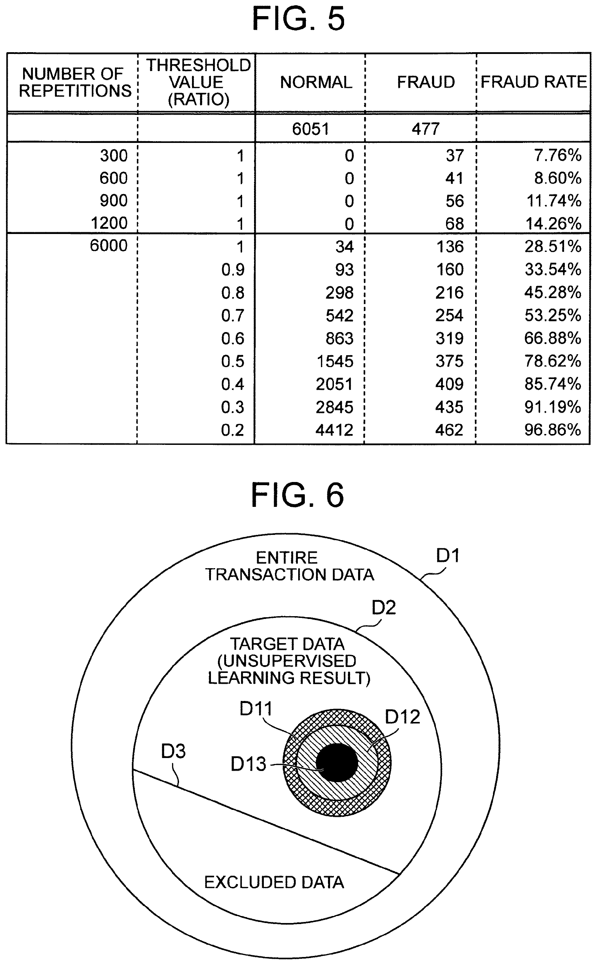

FIG. 5 is an explanatory diagram showing an example of aggregated ratios for each score. In the example shown in FIG. 5, results of a learning process by the second learning unit 50 and a data identification process by the score calculation unit 60 are shown, when the processed are repeated 300 times, 600 times, 900 times, 1200 times, and 6000 times, respectively. FIG. 5 also shows an example in which the number of data matching the condition in which the score is calculated to be 100% in the cases of 300 times, 600 times, 900 times, and 1200 times is aggregated for each normal transaction data and fraudulent transaction data. Further, in the case of 6,000 times, an example is shown in which each normal transaction data and fraudulent transaction data are aggregated in 10% increments of score.

As illustrated in FIG. 5, the number of extracted fraudulent transaction data increases as the number of repetitions increases. Furthermore, when the score is allowed to include not only 100% but also a certain ratio of normal transaction data, it becomes possible to extract more candidates of the fraudulent transaction data. In other words, it is possible to increase the fraud rate (ratio) by setting the threshold value high, and to extract many candidates of fraudulent transaction data by setting the threshold value low.

The visualization unit 70 visualizes the calculated ratio on a display device (not shown). The visualization unit 70 may, for example, visualize the ratio of the number of data corresponding to an area. FIG. 6 is an explanatory diagram showing an example of visualized the ratio of target data. In the example shown in FIG. 6, the target data D2 extracted by unsupervised learning out of the entire transaction data D1 is indicated by a circle corresponding to the area. In addition, among the target data D2, data D3 is excluded by the data exclusion unit 40.

Among the remaining data thus excluded, the fraudulent transaction data is included. The visualization unit 70 may, for example, visualize the ratio of the data with a large score in a manner that is more highlighted than the ratio of the data with a low score. In FIG. 6, an example is shown in which the visualization unit 70 visualizes the ratio of the data with a high score as a black ellipse D13, and as the score becomes lower, as an ellipse D12 and an ellipse D11 with a thinner shading.

By visualizing in this way, the prediction accuracy can be classified together with interpretability. For example, a person in charge of a financial institution will be able to preferentially check the fraudulent transaction data included in the area with higher score.

The target data extraction unit 20, the first learning unit 30, the data exclusion unit 40, the second learning unit 50, the score calculation unit 60, and the visualization unit 70 are realized by a processor of a computer operating according to a program (fraud detection program).

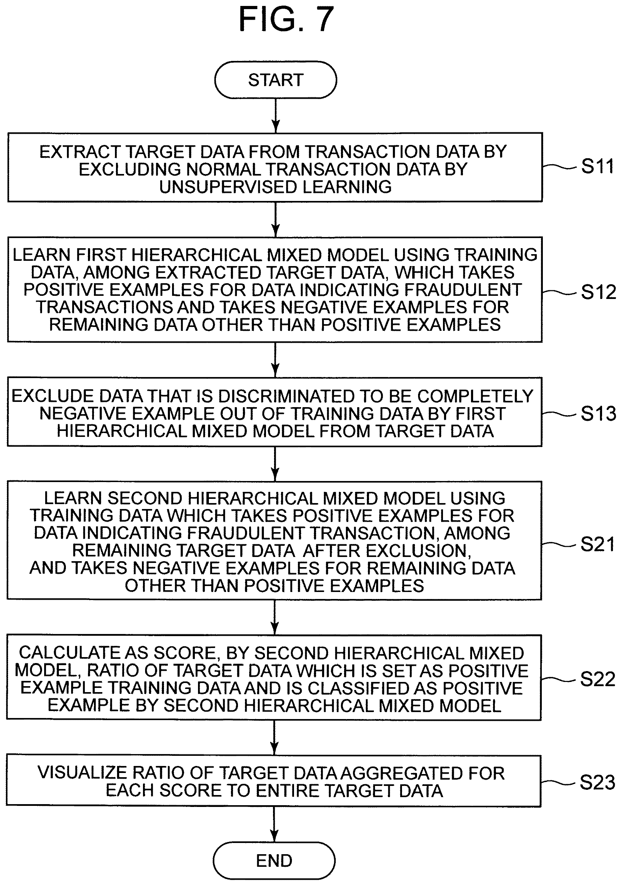

Next, the operation of the fraud detection device of this example embodiment will be described. FIG. 7 is a flowchart showing an operation example of a fraud detection device of this example embodiment. The processing from step S11 to step S13 until the target data is extracted from the transaction data and the normal transaction data is excluded is the same as the processing illustrated in FIG. 4.

The second learning unit 50 learns a second hierarchical mixed model using the training data which takes positive examples for the data indicating fraudulent transactions, among the remaining target data after excluding by the data exclusion unit 40, and takes negative examples for the remaining data other than the positive examples (step S21). The score calculation unit 60 calculates as a score, by the second hierarchical mixed model, a ratio of the target data which is set as a positive example training data and is classified as a positive example by the second hierarchical mixed model (step S22). Then, the visualization unit 70 visualizes the ratio of the target data aggregated for each score to the entire target data (step S23).

As described above, in the present example embodiment, the second learning unit 50 learns a second hierarchical mixed model using training data which takes positive examples for the data indicating fraudulent transactions, among the remaining target data after excluding data, and takes negative examples for the remaining data other than the positive examples. Then, the score calculation unit 60 calculates as a score, by the second hierarchical mixed model, a ratio of the target data which is set as a positive example training data and is classified as a positive example by the second hierarchical mixed model, and the visualization unit 70 visualizes the ratio of the target data aggregated by the score to the entire target data. Thus, in addition to the effect in the first example embodiment, it is possible to classify the prediction accuracy together with interpretability. Therefore, for example, it is possible for a person in charge of a financial institution to confirm the ratio of the fraudulent transaction data.

Next, a specific example of detecting fraudulent transaction data using the fraud detection device according to the present invention will be described. In this specific example, it is assumed that there are 82,663 transaction data of a certain financial institution, of which 480 are fraudulent transaction data (i.e., 82,183 are normal transaction data).

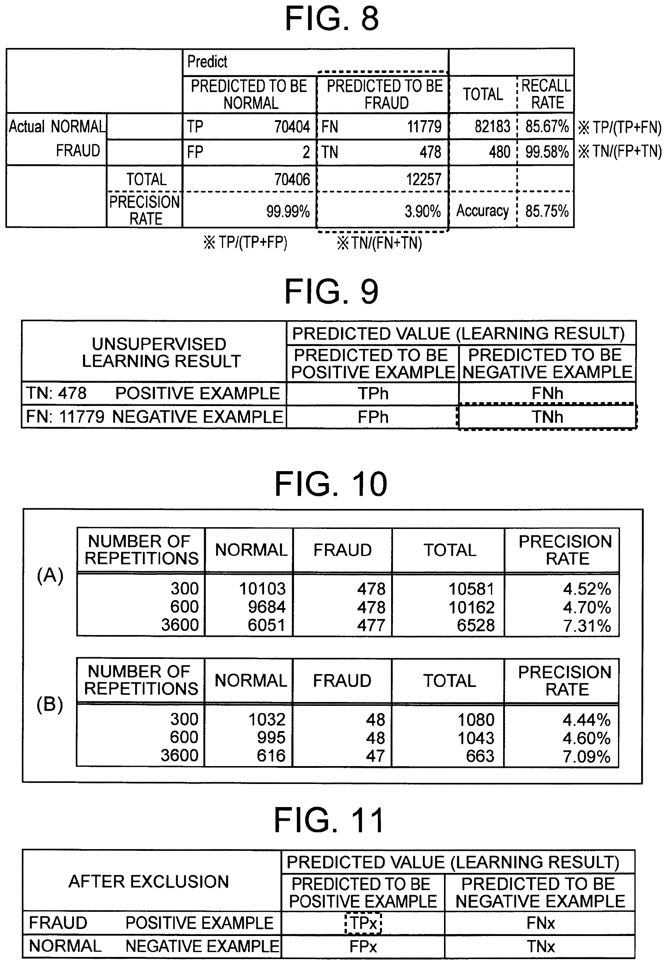

First, the target data extraction unit 20 identifies normal transaction data from the 82,663 transaction data by unsupervised learning, and extracts the target data by excluding the normal transaction data from the transaction data. FIG. 8 is an explanatory diagram showing an example of a result of identifying normal transaction data. In the example shown in FIG. 8, since 70,404 out of 82,183 normal transaction data are predicted to be normal transaction data, the reproduction rate (Recall) is 85.67%. In addition, out of 480 cases of fraudulent transaction data, 478 cases are predicted to be fraudulent transaction data, thus the reproduction rate (Recall) is 99.58%.

Furthermore, in the example shown in FIG. 8, since 70,406 cases predicted to be normal transaction data include 2 cases of fraudulent transaction data, and the precision rate is 99.99%. In addition, 11,779 cases of normal transaction data are included in 12,259 cases predicted as fraudulent transaction data, thus the precision rate is 3.90%. As a result, the accuracy of the entire data (Accuracy) is calculated to be 85.75%. In this specific example, the aim is to reduce the ratio of normal transaction data included in the 12,257 cases predicted to be fraudulent transaction data (the precision rate: 3.90%) and to improve the accuracy rate.

The first learning unit 30 learns the first hierarchical mixed model with the 12,257 data predicted to be fraudulent transaction data, with TN as a positive example and the rest as a negative example. FIG. 9 is an explanatory diagram showing an example of the correspondence between the learning result by unsupervised learning and the learning result by unsupervised learning of the first hierarchical mixed model. As a result of learning the first hierarchical mixed model, TP, FN, FP and TN are calculated, respectively. In FIG. 9, the calculated TP, FN, FP, and TN are indicated by TPh, FNh, FPh, and TNh, respectively, to distinguish them from the results shown in FIG. 8. The data exclusion unit 40 excludes the data corresponding to TNh from the target data as a result of learning.

FIG. 10 is an explanatory diagram showing an example of the result of excluding the target data. FIG. 10 shows the entire accuracy in (A), and the prediction accuracy in (B). As illustrated in FIG. 10, as a result of performing the learning and exclusion processes 3,600 times, the number of data has been reduced by about 50% (to 6,528), the precision rate has been improved to 7.31%, and the prediction accuracy has been improved to 7.09%.

The second learning unit 50 learns the second hierarchical mixed model, for the remaining data after the exclusion, using the training data which takes positive examples for the data indicating fraudulent transactions. FIG. 11 is an explanatory diagram an example of the correspondence between the target data after the data exclusion and the learning result of the second hierarchical mixed model. As a result of learning the second hierarchical mixed model, TP, FN, FP and TN are calculated, respectively. In FIG. 11, the calculated TP, FN, FP and TN are indicated by TPx, FNx, FPx and TNx, respectively, to distinguish them from the results shown in FIG. 8 and 9.

The score calculation unit 60 calculates a score for each node, and the visualization unit 70 identifies and visualizes a high ratio of TPx as a part with high accuracy. The visualization unit 70, for example, visualizes the contents illustrated in FIG. 6 from the results illustrated in FIG. 5.

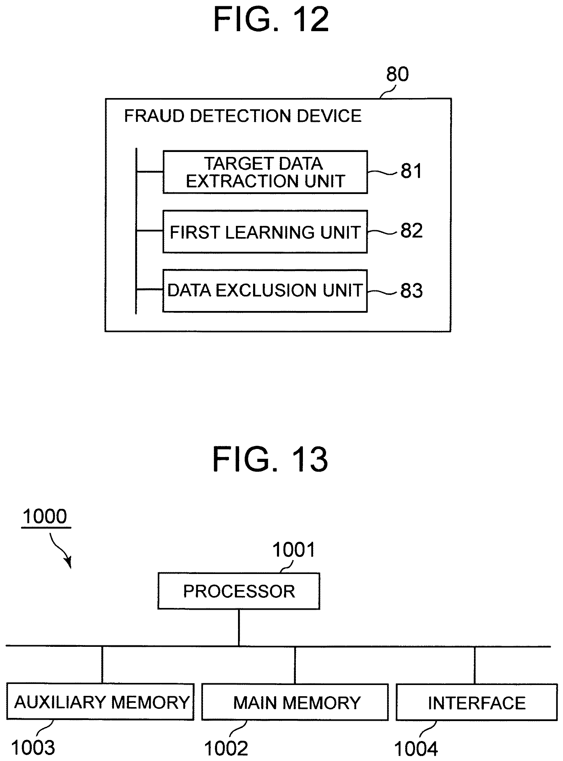

Next, an overview of the present invention will be described. FIG. 12 is a block diagram showing an overview of a fraud detection device according to the present invention. A fraud detection device 80 according to the present invention is a fraud detection device (for example, fraud detection device 100) for detecting a fraudulent transaction in an operation of a financial institution (for example, bank) includes a target data extraction unit 81 (for example, target data extraction unit 20) which extracts target data by excluding normal transaction data from the transaction data in the operation by unsupervised learning (for example, DBSCAN), a first learning unit 82 (for example, first learning unit 30) which learns a first hierarchical mixed model using training data, among the target data, which takes positive examples for the data indicating the fraudulent transaction and takes negative examples for the remaining data other than the positive examples, and a data exclusion unit 83 (for example, data exclusion unit 40) which excludes, from the target data, the target data (TNh) which is set as negative example training data and is classified as a negative example by the first hierarchical mixed model.

With such a configuration, it is possible to learn a model so as to improve the accuracy of detecting a fraudulent transaction even when imbalance data is used.

In addition, the fraud detection device 80 (for example, fraud detection device 200) may include a second learning unit (for example, second learning unit 50) which learns a second hierarchical mixed model using training data, among the remaining target data after exclusion, which takes positive examples for the data indicating the fraudulent transaction and takes negative examples for the remaining data other than the positive examples, a score calculation unit (for example, score calculation unit 60) which calculates as a score a ratio of target data (TP) for which the training data is discriminated as the positive example by the second hierarchical mixed model, and a visualization unit (for example, visualization unit 70) which visualizes the ratio of the target data aggregated for each score to the entire target data.

With such a configuration, the prediction accuracy can be classified together with interpretability. For example, a person in charge of a financial institution will be able to confirm preferentially from the fraudulent transaction data included in the area with a larger score.

Specifically, the score calculation unit may discriminate the training data classified in a leaf node using a discriminant placed to each leaf node, calculate, for each leaf node, as the score the ratio of the target data for which the training data is discriminated as the positive example, and identify a condition of the node for which the calculated score is equal to or greater than a predetermined threshold as the condition with high accuracy of fraudulent transaction.

In addition, the data exclusion unit 83 may discriminate the training data classified in a leaf node using a discriminant placed in each leaf node of the first hierarchical mixed model, calculate, for each leaf node, a ratio of the classified training data that is predicted to be a negative example, and exclude, from the target data, data that satisfies a condition for classification into the leaf node for which the calculated ratio is equal to or greater than a predetermined threshold.

In more detail, the data exclusion unit 83 may identify conditions for exclusion of the target data each time the first hierarchical mixed model is learned, and exclude the data that satisfies the any of the conditions from the target data.

FIG. 13 is a summarized block diagram showing a configuration of a computer for at least one example embodiment. The computer 1000 comprises a processor 1001, a main memory 1002, an auxiliary memory 1003, and an interface 1004.

The fraud detection device is implemented in a computer 1000. The operation of each of the above-described processing parts is stored in the auxiliary storage 1003 in the form of a program (fraud detection program). The processor 1001 reads the program from the auxiliary storage 1003, develops it to the main memory 1002, and executes the above-described processing according to the program.

In at least one example embodiment, the auxiliary memory 1003 is an example of a non-transitory tangible medium. Other examples of a non-transitory tangible medium include a magnetic disk, an optical magnetic disk, a CD-ROM (Compact Disc Read-only memory), a DVD-ROM (Read only memory), semiconductor memory, and the like. When the program is delivered to the computer 1000 through a communication line, the computer 1000 receiving the delivery may extract the program into the main memory 1002 and execute the above processing.

The program may be a program for realizing a part of the above-described functions. Further, the program may be a so-called difference file (difference program) that realizes the aforementioned functions in combination with other programs already stored in the auxiliary memory 1003.

Although the present invention has been described with reference to the foregoing exemplary embodiments and examples, the present invention is not limited to the foregoing exemplary embodiments and examples. Various changes understandable by those skilled in the art can be made to the structures and details of the present invention within the scope of the present invention.

This application claims priority based on Japanese Patent Application No. 2019-108517 filed on June 11, 2019, the disclosure of which is incorporated herein in its entirety.

### Reference Signs List

- 10: Storage unit
- 20: Target data extraction unit
- 30: First learning unit
- 40: Data exclusion unit
- 50: Second learning unit
- 60: Score calculation unit
- 70: Visualization unit
- 100, 200: Fraud detection device

## Claims

1. A fraud detection device for detecting a fraudulent transaction in an operation of a financial institution comprising:
a target data extraction unit which extracts target data by excluding normal transaction data from the transaction data in the operation by unsupervised learning;
a first learning unit which learns a first hierarchical mixed model using training data, among the target data, which takes positive examples for the data indicating the fraudulent transaction and takes negative examples for the remaining data other than the positive examples; and
a data exclusion unit which excludes, from the target data, the target data which is set as negative example training data and is classified as a negative example by the first hierarchical mixed model.

2. The fraud detection device according to claim 1, further comprising
a second learning unit which learns a second hierarchical mixed model using training data, among the remaining target data after exclusion, which takes positive examples for the data indicating the fraudulent transaction and takes negative examples for the remaining data other than the positive examples;
a score calculation unit which calculates as a score a ratio of target data for which the training data is discriminated as the positive example by the second hierarchical mixed model; and
a visualization unit which visualizes the ratio of the target data aggregated for each score to the entire target data.

3. The fraud detection device according to claim 2, wherein
the score calculation unit discriminates the training data classified in a leaf node using a discriminant placed to each leaf node, calculates, for each leaf node, as the score the ratio of the target data for which the training data is discriminated as the positive example, and identifies a condition of the node for which the calculated score is equal to or greater than a predetermined threshold as the condition with high accuracy of fraudulent transaction.

4. The fraud detection device according to any one of claims 1 to 3, wherein
the data exclusion unit discriminates the training data classified in a leaf node using a discriminant placed in each leaf node of the first hierarchical mixed model, calculates, for each leaf node, a ratio of the classified training data that is predicted to be a negative example, and excludes, from the target data, data that satisfies a condition for classification into the leaf node for which the calculated ratio is equal to or greater than a predetermined threshold.

5. The fraud detection device according to claim 4, wherein
the data exclusion unit identifies conditions for exclusion of the target data each time the first hierarchical mixed model is learned, and excludes the data that satisfies the any of the conditions from the target data.

6. A fraud detection method for detecting a fraudulent transaction in an operation of a financial institution comprising:
extracting target data by excluding normal transaction data from the transaction data in the operation by unsupervised learning;
learning a first hierarchical mixed model using training data, among the target data, which takes positive examples for the data indicating the fraudulent transaction and takes negative examples for the remaining data other than the positive examples; and
excluding, from the target data, the target data which is set as negative example training data and is classified as a negative example by the first hierarchical mixed model.

7. The fraud detection method according to claim 6, further comprising:
learning a second hierarchical mixed model using training data, among the remaining target data after exclusion, which takes positive examples for the data indicating the fraudulent transaction and takes negative examples for the remaining data other than the positive examples;
calculating as a score a ratio of target data for which the training data is discriminated as the positive example by the second hierarchical mixed model; and
visualizing the ratio of the target data aggregated for each score to the entire target data.

8. A fraud detection program applied to a computer which detects a fraudulent transaction in an operation of a financial institution, causing the computer to execute:
a target data extraction process of extracting target data by excluding normal transaction data from the transaction data in the operation by unsupervised learning;
a first learning process of learning a first hierarchical mixed model using training data, among the target data, which takes positive examples for the data indicating the fraudulent transaction and takes negative examples for the remaining data other than the positive examples; and
a data exclusion process of excluding, from the target data, the target data which is set as negative example training data and is classified as a negative example by the first hierarchical mixed model.

9. The fraud detection program according to claim 8, further causing the computer to execute:
a second learning process of learning a second hierarchical mixed model using training data, among the remaining target data after exclusion, which takes positive examples for the data indicating the fraudulent transaction and takes negative examples for the remaining data other than the positive examples;
a score calculation process of calculating as a score a ratio of target data for which the training data is discriminated as the positive example by the second hierarchical mixed model; and
a visualization process of visualizing the ratio of the target data aggregated for each score to the entire target data.
